**Europäisches Patentamt**

**European Patent Office**

**Office européen des brevets**

(11) Publication number: **0 179 920**
**B1**

(12) **EUROPEAN PATENT SPECIFICATION**

(45) Date of publication of patent specification: **07.03.90**

(21) Application number: **85902129.7**

(22) Date of filing: **18.04.85**

(86) International application number:
**PCT/JP85/00213**

(87) International publication number:
**WO 85/04979 07.11.85 Gazette 85/24**

(51) Int. Cl.⁵: **G 11 B 20/12**

54 **APPARATUS FOR RECORDING DATA SIGNALS.**

(30) Priority: **18.04.84 JP 78243/84**

(43) Date of publication of application:
**07.05.86 Bulletin 86/19**

(45) Publication of the grant of the patent:
**07.03.90 Bulletin 90/10**

(84) Designated Contracting States:
**AT DE FR GB NL**

(56) References cited:
**EP-A-0 085 578**    **JP-A-6 050 668**
**GB-A-2 060 227**    **JP-A-6 050 753**
**GB-A-2 080 957**    **US-A-4 022 986**
**GB-A-2 082 828**    **US-A-4 075 665**
**JP-A-5 938 911**    **US-A-4 224 642**
**JP-A-5 952 403**

**PATENT ABSTRACTS OF JAPAN, vol. 7, no. 238
(P-231)1383r, 22nd October 1983; & JP-A-58 125
209**

**PATENT ABSTRACTS OF JAPAN, vol. 7, no. 23
(P-171)1168r, 29th January 1983; & JP-A-57 176
517**

(73) Proprietor: **SONY CORPORATION**
**7-35 Kitashinagawa 6-Chome Shinagawa-ku
Tokyo 141 (JP)**

(72) Inventor: **MORIWAKI, Hisayoshi Sony
Corporation**
**7-35, Kitashinagawa 6-chome Shinagawa-ku
Tokyo 141 (JP)**
Inventor: **NAKANO, Kenji Sony Corporation**
**7-35, Kitashinagawa 6-chome
Shinagawa-ku Tokyo 141 (JP)**

(74) Representative: **Thomas, Christopher Hugo
et al**
**D Young & Co 10 Staple Inn
London WC1V 7RD (GB)**

## Description

This invention relates to information signal recording apparatus.

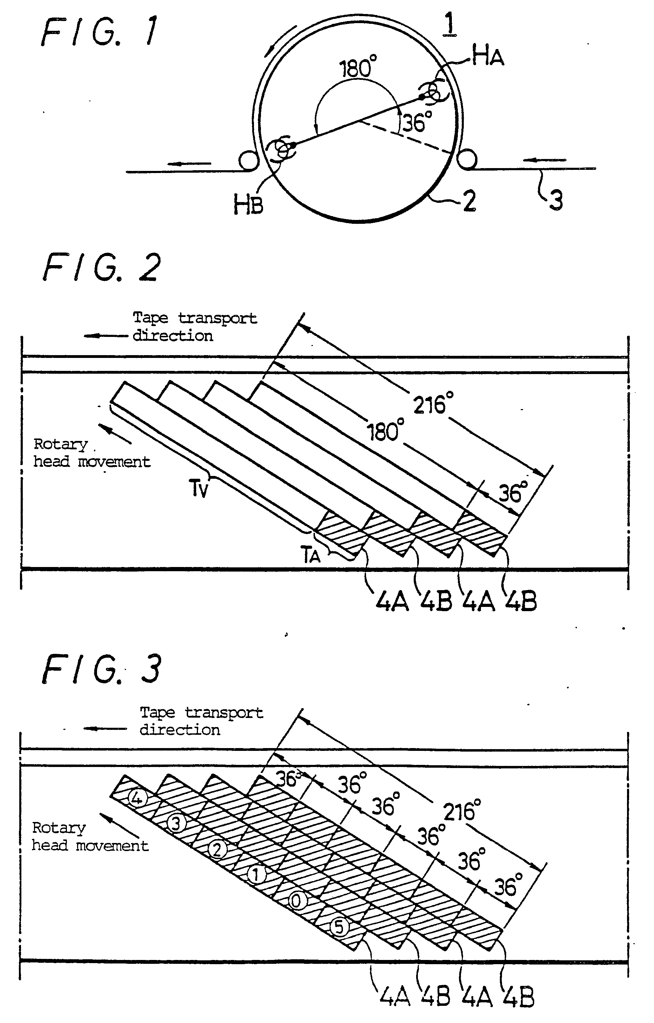

Figure 1 shows a rotary magnetic head assembly 1 used in, for example, an 8 mm video tape recorder (VTR), and comprising a pair of rotary heads $H_A$ and $H_B$ having different azimuth angles and an angular spacing of 180°, and a rotary drum 2 around which a magnetic tape 3 is obliquely wrapped over an angular range of a little over 216°.

Figure 2 shows a track pattern formed by the rotary heads $H_A$ and $H_B$ when they trace the magnetic tape 3, in which each of the oblique tracks 4A and 4B is divided into a video signal recording interval (hereinafter a video interval) $T_V$ and an audio signal recording interval (hereinafter an audio interval) $T_A$ shown hatched.

The audio interval $T_A$ is assigned a duration corresponding to a rotation angle of nearly 36° of the rotary heads $H_A$ and $H_B$ at the start of contact with the magnetic tape 3, while the video interval $T_V$ is assigned the remaining duration corresponding to nearly 180°. A video signal of one field is recorded in the video interval $T_V$. In the audio interval $T_A$, there is recorded an audio signal relating to the video signal of one field, as a PCM time-base compressed digital audio signal.

It has been proposed in our European patent specification EP—A2—0 085 578 that such an 8 mm VTR also be used as an audio tape recorder. In this case, when the VTR is used only as an audio tape recorder, the video interval $T_V$ is used as audio intervals. Since the video interval $T_V$ is five times as long as the audio interval $T_A$, six audio intervals can be recorded in the segments ① to ⑤ in each of the oblique tracks 4A and 4B as shown in Figure 3. Accordingly, when an audio signal from the same source is recorded, the recording time becomes six times as long. Moreover, when different audio signals are recorded in the respective segments ① to ⑤, the audio signals of six channels can be recorded simultaneously.

Since the audio signal is a PCM digital audio signal, and the sampling frequency is $2f_H$ (where $f_H$ is the horizontal frequency), the frequency band is narrower than that of an audio signal reproduced from a PCM audio compact disc, and hence the quality of the audio signal is inferior.

Thus, as disclosed in the above specification, the recording time can be prolonged or the number of recording channels can be increased, but the tone quality is inferior.

Our UK patent specification GB—A—2080997 discloses a digital tape recorder for PCM audio signals with multiple recording formats including variations in sampling rate and tape transport speed, and recording of each channel in a plurality of longitudinal tracks.

According to the present invention there is provided an information signal recording apparatus in which on one oblique magnetic track formed by a pair of rotary heads a PCM time-base compressed digital audio signal is recorded, said apparatus being such that a sequential plurality of similar recording segments are formed in each said oblique track, said apparatus being characterized by:

a common analogue-to-digital converter for selectively converting an analogue audio input signal into a digital audio signal using a first sampling frequency $f_s$ in a first mode and using a second sampling frequency $mf_s$ (where m is an integer) in a second mode;

a data distributor for distributing the output of said analogue-to-digital converter to two lines alternately in said second mode;

a first PCM processor and a second PCM processor for respectively encoding the outputs on said two lines, said first and second PCM processors each having a digital processing rate of $1/f_s$ and each processing data with the same predetermined quantization bit number;

a mode controller for selectively establishing said first mode in which a PCM digital audio signal sampled at said first sampling frequency $f_s$ and processed at said $1/f_s$ rate and with said predetermined quantization bit number in said first PCM processor is recorded on at least one recording segment, and for selectively establishing said second mode in which a PCM digital audio signal sampled at said second sampling frequency $mf_s$ and processed at the same $1/f_s$ rate and with the same predetermined quantization bit number in both of said first and second PCM processors is distributed and recorded in at least m recording segments in which said one recording segment selected for said first mode is included; and

an OR gate circuit for combining the outputs of said first and said second PCM processors.

The invention will now be described by way of example with reference to the accompanying drawings, throughout which like parts are referred to by like references, and in which:

Figure 1 is a diagram showing part of a VTR;

Figures 2 and 3 are track pattern diagrams;

Figure 4 is a block diagram of part of an embodiment of information signal recording apparatus according to this invention;

Figure 5 is a block diagram showing part of a reproducing apparatus;

Figures 6 to 8 and 10 to 12 are waveform diagrams; and

Figure 9 is a track pattern diagram.

The embodiment of information signal recording apparatus to be described is applied to an 8 mm VTR.

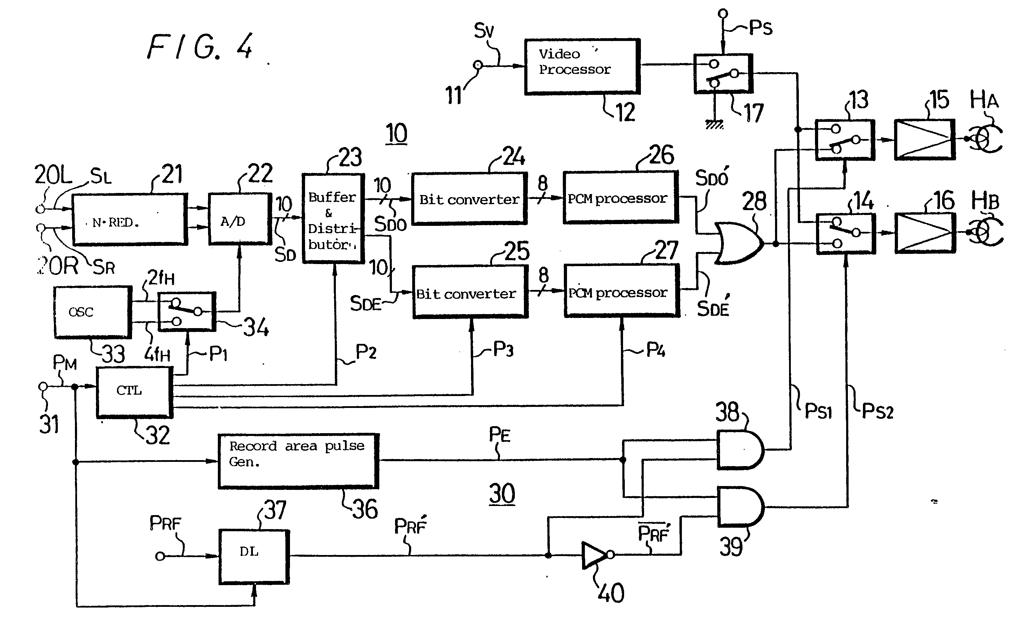

Referring to Figure 4, in the information signal recording apparatus 10, a video signal $S_V$ applied to a terminal 11 is supplied to a video processor 12 which processes it to become a signal having a suitable signal format. Then, it is applied to a pair of switching circuits 13 and 14, which select alternate fields of the video signal $S_V$ for supply via amplifiers 15 and 16 respectively to corresponding rotary heads $H_A$ and $H_B$ to be recorded in the corresponding video intervals $T_V$ at every field.

A switching circuit 17, provided at the output of the video processor 12, is changed in position to the earth terminal side when the apparatus is used as an audio tape recorder only, preventing the video signal $S_V$ from being supplied to the rotary heads $H_A$ and $H_B$. Therefore, a switching pulse Ps is a pulse which relates to the changing-over (manually) of the mode between the VTR and the audio only mode.

Left and right audio signals $S_L$ and $S_R$ fed to terminals 20L and 20R are supplied to a noise reduction circuit 21, in which the noises thereof are reduced. Then, they are supplied to an A/D converter 22 where the left and right audio signals $S_R$ are alternatively A/D-converted. In the VTR, a sampling frequency $f_s$ for A/D conversion is $2f_H$ (where $f_H$ is the horizontal frequency) and the quantization bit number is 10 bits. A PCM digital audio signal $S_D$ is supplied to a data distributor 23 serving as a buffer, and then to a pair of bit converters 24 and 25 in which it is subjected to 10-8 bit compression processing.

When this apparatus is used as a VTR, the functions of the data distributer 23 and of the one bit converter 25 are inhibited.

8-bit non-linearly quantized digital audio signals $S_D$ ($S_{D0}$ and $S_{DE}$) are respectively supplied to PCM processors 26 and 27, each of which uses the frequency $2f_H$ as the clock frequency thereof, and in which error correction and interleave processing are carried out. Then, the digital audio signal $S_D$ corresponding to the video signal $S_V$ of one field is compressed in time base by using a RAM. The digital audio signals $S_D(S'_{D0}, S'_{DE})$ with the time-base compressed is supplied through an OR circuit 28 to the switching circuits 13 and 14.

The switching circuits 13 and 14 carry out a different switching operation for the VTR mode and the audio only mode. Moreover, the signal system from the A/D converter 22 to the PCM processor 27 becomes different between when the apparatus is used as a VTR and for audio only. Reference numeral 30 shows an example of a control circuit for producing various signals necessary for such operational modes.

In the control circuit 30, to a terminal 31, there is supplied a control pulse $P_M$ relating to the changing-over of the apparatus between the VTR mode and the audio mode. In response to the control pulse, a control pulse generating circuit 32 produces predetermined control pulses $P_1$ to $P_4$. The control pulse $P_1$ is used to change-over the sampling frequencies $f_s$ and $f_s$ that are to be supplied to the A/D converter 22. The sampling frequencies $f_s=nf_H$ and $f'_s=mf_s$ (n is a positive number and m is an integer), generated from an oscillator 33 are supplied to a switching circuit 34 and one of the sampling frequencies $f_s$ and $f'_s$ selected by the control pulse $P_1$ is supplied to the A/D converter 22.

The control pulse $P_2$ is used to control the data distributor 23; the control pulse $P_3$ is used to control one bit converter 25; and the control pulse $P_4$ is used to control one PCM processor 27.

The control pulse $P_M$ is further supplied to a generating circuit 36 for generating a recording area pulse $P_E$ and to a delay circuit 37 for delaying a head switching pulse $P_{RF}$. As will be described later, when the control pulse $P_M$ is "L", one recording area pulse $P_E$ is generated per field, while when it is "H", there are produced two recording area pulses $P_E$ per field. Further, only when the control pulse $P_M$ is "H", the head switching pulse $P_{RF}$ is delayed by a predetermined time.

The recording area pulse $P_E$ and the head switching pulse $P_{RF}$ are supplied to a first AND circuit 38 which generates a switching pulse $P_{S1}$, while this recording area pulse $P_E$ and a head switching pulse $\overline{P'_{RF}}$, which results from inverting the head switching pulse in an inverter 40, are supplied to a second AND circuit 39 which produces a switching pulse $P_{S2}$. The switching pulse $P_{S1}$ is supplied to the switching circuit 13, and the switching pulse $P_{S2}$ is supplied to the switching circuit 14.

In this circuit arrangement, let it be assumed that in the VTR mode, the control pulse $P_M$ becomes "L", while in the audio only mode, it becomes "H". First of all, the VTR mode (normal mode) will be described.

In the VTR mode, the sampling frequency $f_s$ of $2f_H$ is selected by the control pulse $P_1$ generated for this mode, and the data distributor 23, the bit converter 25 and the PCM processor 27 are inhibited by the control pulses $P_2$ to $P_4$. As a result, the digital audio signal $S_D$, which is sampled at the sampling frequency $2f_H$, is passed through the data distributor 23, bit-converted and pulse code modulated. Thereafter, it is fed to the switching circuits 13 and 14.

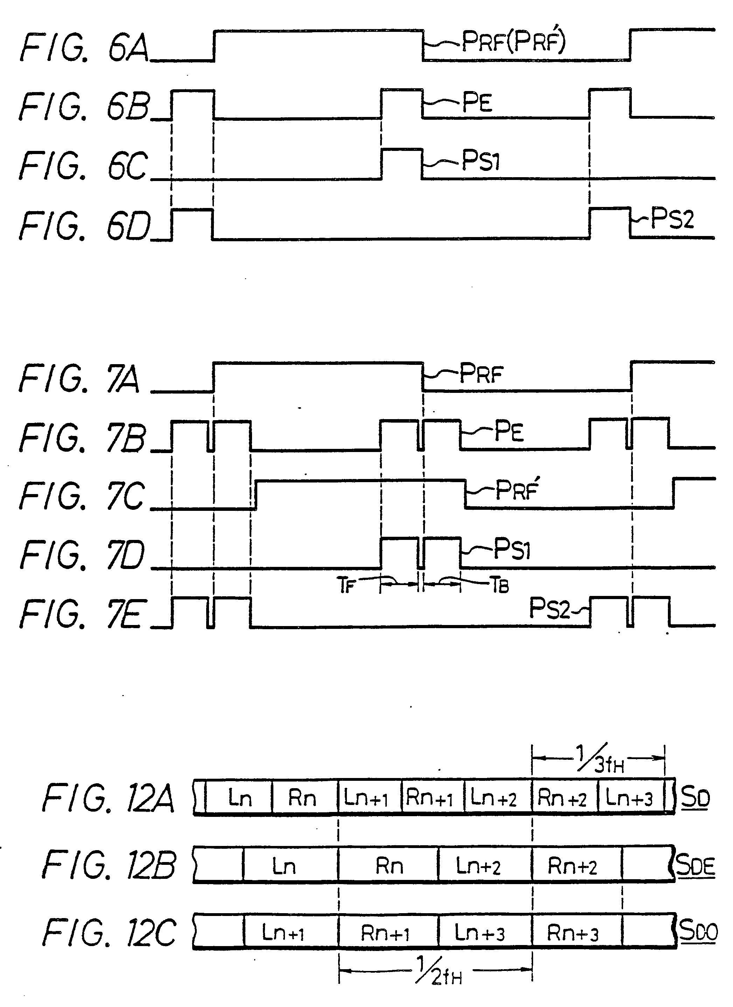

In this mode, one recording area pulse $P_E$ shown in Figure 6B is generated. In this example, the pulse width and the pulse generating timing of the recording area pulse $P_E$ are determined such that it is produced in correspondence with the audio interval $T_A$ shown in Figure 2. Since the head switching pulse $P_{RF}$ (Figure 6A) is supplied to the first and second AND circuits 38 and 39 as it is, therefrom there are produced the first and second switching pulses $P_{S1}$ and $P_{S2}$ as shown in Figures 6C and 6D. When the first and second switching pulses $P_{S1}$ and $P_{S2}$ are respectively "H", the switching circuits 13 and 14 engage the sides shown by the solid lines. Since the period of the head switching pulse $P_{RF}$ corresponds to the video interval $T_V$ shown in Figure 2, the digital audio signal $S_D$ is supplied to the corresponding rotary heads $H_A$ and $H_B$ only during the audio interval $T_A$, and thereby the digital audio signal $S_D$ is recorded.

During a period in which the first and second switching pulses $P_{S1}$ and $P_{S2}$ are "L", the video signal $S_V$ is recorded in the video interval $T_V$. Accordingly, the video signal $S_V$ and the digital audio signal $S_D$ are recorded with normal recording patterns.

On the other hand, when the VTR is changed over in mode to the audio only mode, which is intended to improve the tone quality, $mf_s$ is selected as the sampling frequency $f_s$. In this embodiment, in order to improve the frequency characteristics of the audio signals $S_L$ and $S_R$, m=2 and, accordingly, n=4 are established, so that the audio signals $S_L$ and $S_R$ are sampled by a sampling frequency twice the sampling frequency used in the VTR mode, and are thereby converted to the PCM digital audio signal $S_D$.

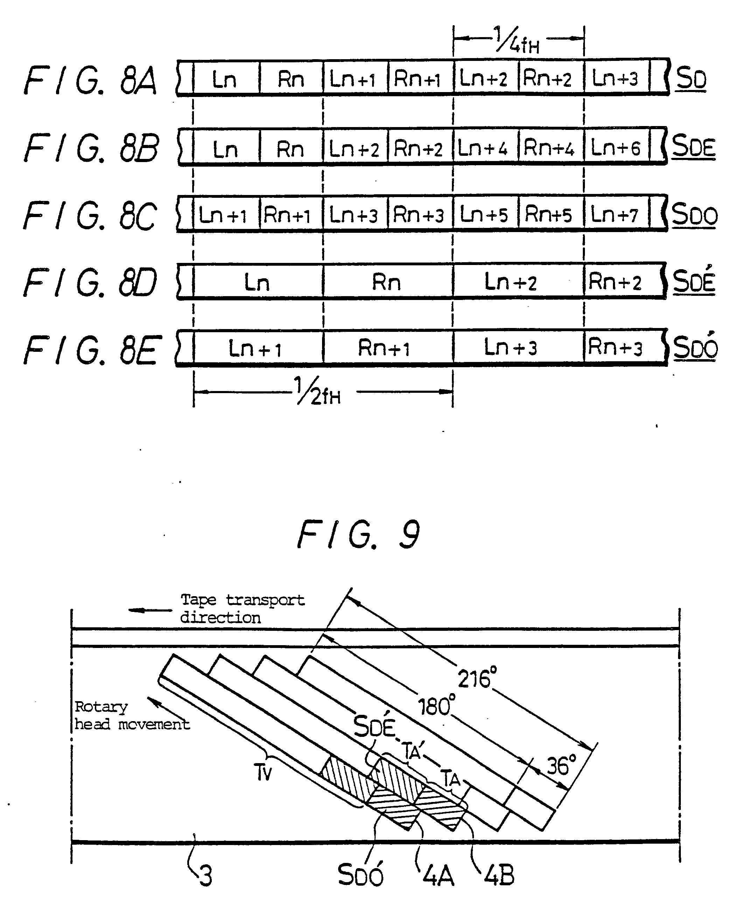

Further, by the control pulses $P_2$ to $P_4$, the data distributor 23, the bit converter 25 and the PCM processor 17 are respectively operated sequentially to distribute the data alternately in such a manner that on the basis of the left and right portions L and R of the digital audio signal $S_D$ in which left and right audio signals $S_L$ and $S_R$ are alternately and sequentially digitized as shown in Figure 8A, the data distributor 23 alternately distributes an odd digital audio signal $S_{DO}$ as shown in, for example, Figure 8C to one bit converter 24, and an even digital audio signal $S_{DE}$ as shown in Figure 8B to the other bit converter 25, sequentially.

The digital audio signals $S_{DO}$ and $S_{DE}$ thus bit-converted are respectively subjected to the predetermined digitizing process in the PCM processors 26 and 27. The processing rates of the PCM processors 26 and 27 are each $1/2f_H$ the same as that of the VTR. Accordingly, the digital audio signals $S_{DO}$ and $S_{DE}$ after being digitally processed become as shown in Figures 8D and 8E. The output timing of one digital audio signal $S_{DE}$ is provided after one digital audio signal $S_{DO}$ has been produced.

When the apparatus is used for audio only, the generating circuit 36 produces the two recording area pulses $P_E$ shown in Figure 7B. The former pulse of the recording area pulses $P_E$ corresponds to the audio interval $T'_A$ shown in Figure 2 as described above, while the latter pulse corresponds to an auxiliary audio interval $T'_A$ whose length is the same as the audio interval which follows the audio interval $T'_A$ in the video interval $T_V$ as shown in Figure 9. In the audio only mode, the delay circuit 37 is operated to delay the head switching pulses $P_{RF}$ by a time substantially equal to the auxiliary audio interval $T'_A$, resulting in a delayed pulse $P'_{RF}$ shown in Figure 7C.

As a result, since the first and second switching pulses $P_{S1}$ and $P_{S2}$ shown in Figures 7D and 7E are generated, one digital signal $S'_{DO}$ is recorded during a period $T_F$, while the other digital signal $S'_{DE}$ is recorded during a period $T_B$. When the apparatus is used as for audio only, the video line is earthed by the switching circuit 17, so that only the digital signals $S'_{DO}$ and $S'_{DE}$ are recorded.

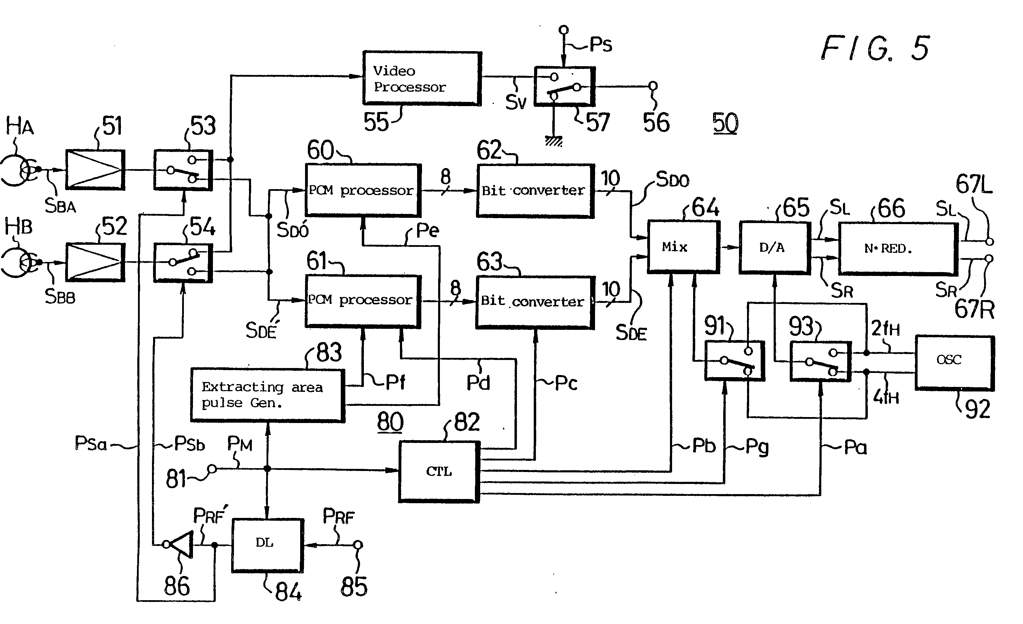

Figure 5 shows an example of a reproducing apparatus 50.

The video signal $S_V$ and the digital audio signal $S_D$, $S'_{DO}$ and $S'_{DE}$ reproduced by the rotary heads $H_A$ and $H_B$ are supplied through preamplifiers 51 and 52 to a pair of switching circuits 53 and 54. The video signal $S_V$ selected thereby are reconverted to the original signal form by a video processor 55 and the resulting video signal is supplied to an output terminal 56. A switching circuit 57 is changed in position to the earth side by a control pulse Ps only when the apparatus is used for audio only.

On the other hand, the digital audio signals selected by the switching circuits 53 and 54 are corrected for error and time base-compressed, etc., by a pair of PCM processors 60 and 61. Thereafter, they are respectively supplied to bit converters 62 and 63, in which they are subjected to 8-10 conversion. The 10-bit digital audio signals $S_{DO}$ and $S_{DE}$ are then supplied through a mixer 64 to a D/A converter 65 and thereby converted to analogue signals. Then, the left and right audio signals $S_L$ and $S_R$ therefrom are subjected to the noise reduction processing by a noise reduction circuit 66, and then final audio signals $S_L$ and $S_R$ are developed at output terminals 67L and 67R, respectively.

A control circuit 80 produces control pulses that are opposite to those of the recording system. On the basis of a control pulse $P_M$ applied to a terminal 81, a pulse generating circuit 62 generates control pulses Pa to Pd. The control pulse $P_M$ is further applied to an extracting area pulse generating circuit 83 which produces a pair of extracting area pulses Pe and Pf. The control pulse $P_M$ is further fed to a delay circuit 84, whereby the head switching pulse $P_{RF}$ applied to a terminal 85 is delayed by a predetermined delay time and then supplied. The delayed pulse $P'_{RF}$ itself is used as a first switching pulse Psa, while a delayed pulse $\overline{P'_{RF}}$ from an inverter 86 is used as a second switching pulse Psb. An oscillator circuit 92 generates frequencies $2f_H$ and $4f_H$, switched by a switching circuit 93.

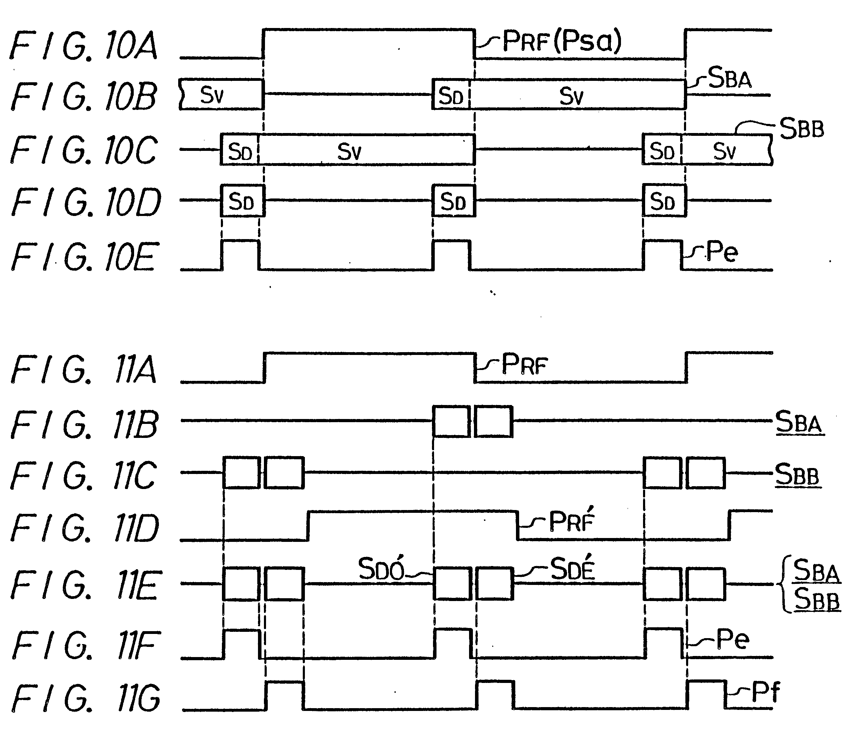

With this circuit arrangement, in the normal operation mode in which the apparatus is used as a VTR, the delay circuit 84 is inoperative, so that the head switching pulse $P_{RF}$ and the phase-inverted pulse thereof are supplied to the first and second switching circuits 53 and 54 as the first and second switching pulses Psa and Psb, respectively, whereby the outputs $S_{BA}$ and $S_{BB}$ (Figures 10B and 10C) reproduced by the rotary heads $H_A$ and $H_B$ are changed over. Of the reproduced outputs $S_{BA}$ and $S_{BB}$, the video signal $S_V$ is supplied to the video processor 55.

The control pulses Pc and Pd generated in the VTR mode inhibit the functions of both the bit converter 63 and the PCM processor 61 and the control pulse Pb controls the mixer 64 to be set in the through-state. Moreover, by the control pulse Pa, the switching means 88 is controlled so that of the clocks $2f_H$ and $4f_H$ generated by the oscillator 89, the clock with the frequency $2f_H$ is selected and then fed to the D/A converter 65.

The pulse generating circuit 83 produces a latching area pulse Pe shown in Figure 10E. This pulse is supplied to the PCM processor 60 which latches one of the reproduced outputs $S_{BA}$ and $S_{BB}$ reproduced by the rotary heads $H_A$ and $H_B$ during an interval corresponding to the audio interval $T_A$. That is, only the digital audio signal $S_D$ is latched (Figure 10D) therein, and then converted to 10-bit data by the bit converter 62.

Then these data are converted to an analogue signal by the clock signal with the frequency $2f_H$.

In the audio only mode, by the control pulses Pd to Pb, the PCM processor 61, the bit converter 63 and the mixer 64 are respectively operated while by the control pulse Pa, the clock with the frequency $4f_H$ is selected. Moreover, the delay circuit 84 is operated, and the head switching pulse $P_{RF}$ is delayed by a delay time substantially the same as the auxiliary audio interval $T'_A$. This delayed pulse is supplied to the first switching circuit 53 as the first switching pulse Psa, and the phase-inverted pulse thereof is supplied to the second switching circuit 54 as the second switching pulse Psb, so that the reproduced outputs $S_{BA}$ and $S_{BB}$ shown in Figures 11B and 11C are converted to a signal series shown in Figure 11E, which are then fed to the PCM processors 60 and 61.

In the audio only mode, the latch area pulse Pe (Figure 11F) corresponding to the audio interval $T_A$ is generated and the latch area pulse Pf (Figure 11G) corresponding to the auxiliary audio interval $T_A$ is also generated, which is then fed to the other PCM processor 61.

Accordingly, in the PCM processor 60, the digital audio signal $S_{DO}$ is time-base-expanded, while in the other PCM processor 61, the digital audio signal $S'_{DE}$ is time-base-expanded, then they are digitally processed on the basis of the clock with frequency $2f_H$, converted to 10-bit data and fed to the mixer 64. The mixer 64 reconverts the digital audio signals $S'_{DO}$ and $S'_{DE}$ shown in Figures 8D and 8E to the digital audio signal $S_D$ shown in Figure 8A, and is formed of a buffer memory and a switching circuit. The buffer memory is supplied with the write clock with the frequency $2f_H$ and the read clock with the frequency $4f_H$ through a switching means 91. The switching means 91 is changed in position by a control pulse Pg from the pulse generating circuit 80. The digital audio signal $S_D$ thus reversely converted is D/A-converted by the clock with the frequency $4f_H$.

As mentioned above, in the audio only mode, by increasing the sampling frequency $f_s$ of the audio signal to $4f_H$ and digitizing it, the frequency band of the reproduced audio signal can be extended to a higher frequency band region. Although the amount of data is doubled by changing the sampling frequency $f_s$ to $4f_H$, by providing the auxiliary audio interval $T'_A$ in the video interval $T_V$, the increased data can be recorded in the auxiliary audio interval $T'_A$.

When the audio data is recorded on the two recording areas separately, if the left and right audio data are alternately dispersed and then recorded on the respective recording areas as described hereinabove, even although the audio signal is reproduced by a prior art tape recorder, the audio data recorded in the audio interval $T_A$ can be reproduced. Therefore, the original audio signal can be reproduced, although the frequency characteristic is deteriorated.

In such a case, if the former half of the audio data is recorded on the audio interval $T_A$ and the latter half thereof is recorded on the auxiliary audio interval $T'_A$, it is not possible to reproduce the original audio signal only from the audio interval $T_A$.

When the audio data is diffusively recorded (that is, distributed and recorded), it may be that the left audio data is recorded in the audio interval $T'_A$ while the right audio data is recorded in the auxiliary audio interval $T_A$, respectively. At that time, in the reproducing apparatus 50, if the left and right audio signals thus D/A-converted are supplied to the noise reduction circuit 66 under the condition that they are short-circuited, the monaural mode is presented. If they are reproduced in only the audio mode, it is possible to obtain a quasi-monaural sound of which the frequency characteristics is extended two-fold.

Since the recording apparatus 10 can be used as a audio tape recorder only by adding the bit converter, the PCM processor and the data distributor to the circuit system thereof, the circuit arrangement thereof can be simplified.

While in the above description the frequency $4f_H$ is selected as the sampling frequency $f'_s$ thereby to extend the frequency characteristic two-fold it is possible to obtain a frequency characteristic 1.5 times the prior art by establishing $f'_s = 3f_H$.

In this case, the digital audio signal $S_D$ that was sampled by the frequency $3f_H$ is converted to the sampling mode with the frequency $2f_H$ (Figures 12A to 12C) by the data distributor 23. Then, similarly to the case of Figure 4, the data are distributed so that the first digital audio signal $S_{DO}$ (Figure 12B) is supplied to the first bit converter 24, while the second digital audio signal $S_{DE}$ (Figures 12C) is supplied to the second bit converter 25.

If the sampling rate is changed as described above, parts of the audio interval $T_A$ and the auxiliary audio interval $T'_A$ become respectively a non-recording interval. For this reason, in order to match the signal format with the recording format of a 8 mm VTR, dummy data are recorded in each of the non-recording intervals. As the dummy data, it is possible to use the data stored in the time-base compressing RAMs which are provided in the PCM processors 26 and 27.

While in the afore-mentioned embodiment the audio signal of one channel is recorded, it is possible to record the audio signals of three channels simultaneously by utilizing all of the video interval $T_V$. Thus, it is possible to treble the recording time.

Further, it is not necessary to divide the recording intervals so that the first channel is assigned to the segments ⑤ and ⑩, the second channel is assigned to the segments ① and ②, and the third interval is assigned to the segments ③ and ④ as shown in Figure 3, but it is possible to record a single channel or a plurality of channels by using any desired two intervals.

Furthermore, if the audio interval $T_A$ is used as one recording interval, the original audio signal can be reproduced only from the audio data recorded in the audio interval $T_A$ by re-recording the predetermined video signal $S_V$ in the video interval $T_V$ after the audio only mode has been changed over into the VTR mode.

**Claims**

1. An information signal recording apparatus in which on one oblique magnetic track (4A, 4B) formed by a pair of rotary heads ($H_A$, $H_B$) a PCM time-base compressed digital audio signal is recorded, said apparatus being such that a sequential plurality of similar recording segments are formed in each said oblique track, said apparatus being characterized by:
a common analogue-to-digital converter (22) for selectively converting an analogue audio input signal into a digital audio signal using a first sampling frequency $f_s$ in a first mode and using a second sampling frequency $mf_s$ (where m is an integer) in a second mode;
a data distributor (23) for distributing the output of said analogue-to-digital converter (22) to two lines alternately in said second mode;
a first PCM processor (24, 26) and a second PCM processor (25, 27) for respectively encoding the outputs on said two lines, said first and second PCM processors (24, 26; 25, 27) each having a digital processing rate of $1/f_s$ and each processing data with the same predetermined quantization bit number;
a mode controller (32) for selectively establishing said first mode in which a PCM digital audio signal sampled at said first sampling frequency $f_s$ and processed at said $1/f_s$ rate and with said predetermined quantization bit number in said first PCM processor (24, 26) is recorded on at least one recording segment, and for selectively establishing said second mode in which a PCM digital audio signal sampled at said second sampling frequency $mf_s$ and processed at the same $1/f_s$ rate and with the same predetermined quantization bit number in both of said first and second PCM processors is distributed and recorded in at least m recording segments in which said one recording segment selected for said first mode is included; and
an OR gate circuit (28) for combining the outputs of said first and second PCM processors (24, 26; 25, 27).

2. Apparatus according to claim 1 further comprising a third mode in which in said one recording segment a PCM time-base compressed digital audio signal is recorded while on other recording segments of the same oblique track a frequency modulated video signal is recorded.

3. Apparatus according to claim 1 wherein said analogue audio input signal include left and right audio signals of a stereo audio signal.

**Patentansprüche**

1. Vorrichtung zum Aufzeichnen von Informationssignalen, in der ein in seiner Zeitbasis komprimiertes digitales Tonsignal in einer von zwei rotierenden Köpfe ($H_A$, $H_B$) erzeugten Schrägspur (4A, 4B) aufgezeichnet wird, wobei die Vorrichtung so ausgebildet ist, daß in jeder Schrägspur aufeinanderfolgend eine Mehrzahl gleicher Aufzeichnungssegmente gebildet wird, gekennzeichnet durch
einen gemeinsamen Analog-Digital-Wandler (22) zur selektiven Umwandlung eines analogen Eingangs-Tonsignals in ein digitales Tonsignal, wobei in einer ersten Betriebsart eine erste Abstastfrequenz $f_s$ und in einer zweiten Betriebsart eine zweite Abstastfrequenz $mf_s$ (m ganzzahlig) verwendet wird.
einen Datenverteiler (23) zur Verteilung des Ausgangssignals des Analog-Digital-Wandlers (22) abwechselnd auf zwei Leitungen in der genannten zweiten Betriebsart,
einen ersten PCM-Processor (24, 26) und einen zweiten PCM-Prozessor (25, 27) zur Kodierung der jeweiligen Ausgangssignale der beiden Leitungen, wobei der erste und der zweite PCM-Prozessor (24, 26; 25, 27) jeweils eine digitale Verarbeitungsrate von $1/f_s$ haben und jeder von ihnen Daten mit derselben vorbestimmten Quantisierungs-Bitzahl verarbeitet,
eine Betriebsart-Steuereinrichtung (32) zur wahlweisen Einstellung entweder der ersten Betriebsart, in der ein mit der ersten Abstastfrequenz $f_s$ abgetastetes und mit der genannten Verarbeitungsrate $1/f_s$ und mit der vorbestimmten Quantisierungs-Bitzahl in dem ersten PCM-Prozessor (24, 26) verarbeitetes digitales PCM-Tonsignal in wenigstens einem Aufzeichnungssegment aufgezeichnet wird, oder der zweiten Betriebsart, in der ein mit der zweiten Abstastfrequenz $mf_s$ abgetastetes und mit derselben Verarbeitungsrate $1/f_s$ und derselben vorbestimmten Quantisierungs-Bitzahl sowohl in dem ersten als auch in dem zweiten PCM-Prozessor verarbeitetes digitales PCM-Tonsignal aufgeteilt und in wenigstens m Aufzeichnungssegmenten aufgezeichnet wird, wobei sich unter diesen Aufzeichnungssegmenten auch das genannte eine, für die erste Betriebsart ausgewählte Aufzeichnungssegment befindet,
und eine ODER-Gatterschaltung (28) zum Kombinieren der Ausgangssignale des ersten und des zweiten PCM-Prozessors (24, 26; 25, 27).

2. Vorrichtung nach Anspruch 1 mit dem weiteren Merkmal, daß eine dritte Betriebsart vorgesehen ist, in der in dem genannten einen Aufzeichnungssegment ein in seiner Zeitbasis komprimiertes digitales PCM-Tonsignal aufgezeichnet wird, während in anderen Aufzeichnungssegmenten derselben Schrägspur ein frequenzmoduliertes Videosignal aufgezeichnet wird.

3. Vorrichtung nach Anspruch 1, bei der das analoge Eingangs-Tonsignal das rechte und das linke Tonsignal eines Stereo-Tonsignals beinhalten.

**Revendications**

1. Appareil enregistreur de signaux d'information dans lequel est enregistré un signal sonore numérique à base de temps comprimée en modulation par impulsion codées PCM sur une piste magnétique oblique (4A, 4B) constituée par une paire de tête tournantes ($H_A$, $H_B$), l'appareil étant tel qu'une ensemble séquentiel de segments d'enregistrement similaires sont formés dans chaque piste oblique, l'appareil étant caractérisé par:

—un convertisseur analogique-numérique commun (22) pour convertir sélectivement un signal sonore analogique d'entrée en un signal sonore numérique en mettant en oeuvre une première fréquence d'échantillonnage $f_s$ dans un premier mode et en mettant en oeuvre une deuxième fréquence d'échantillonnage $mf_s$ (où m est un entier) dans un deuxième mode;

—un répartiteur de données (23) pour répartir le signal de sortie du convertisseur analogique-numérique (22) sur deux lignes alternativement dans le deuxième mode;

—un premier processeur en PCM (24, 26) et un deuxième processeur en PCM (25, 27) pour coder respectivement les signaux de sortie sur les deux lignes, les premier et deuxième processeurs en PCM (24, 26; 25, 27) ayant chacun une vitesse de traitement en numérique $1/f_s$ et traitant chacun des données avec le même nombre de bits de quantification prédéterminé;

—un contrôleur de mode (32) pour établir sélectivement le premier mode dans lequel un signal sonore numérique en PCM échantillonné à la première fréquence d'échantillonnage $f_s$ et traité à la vitesse $1/f_s$ et avec le nombre de bits de quantification prédéterminé dans le premier processeur en PCM (24, 26) est enregistré dans au moins un segment d'enregistrement, et pour établir sélectivement le deuxième mode dans lequel un signal sonore numérique en PCM échantillonné à la deuxième fréquence d'échantillonnage $mf_s$ et traité à la même vitesse $1/f_s$ et avec le même nombre de bits de quantification prédéterminé à la fois dans les premier et deuxième processeurs en PCM est réparti et enregistré dans au moins m segments d'enregistrement où le segment d'enregistrement sélectionné pour le premier mode est inclus; et

—un circuit à porte OU (28) pour combiner les signaux de sortie des premier et deuxième processeurs en PCM (24, 26; 25, 27).

2. Appareil selon la revendication 1, comprenant en outre un troisième mode dans lequel un signal sonore numérique à base de temps comprimée en PCM est enregistré dans le segment d'enregistrement alors que dans les autres segments d'enregistrement de la même piste oblique est enregistré un signal vidéo modulé en fréquence.

3. Appareil selon la revendication 1, dans lequel le signal sonor analogique d'entrée comprend des signaux sonore de gauche et de droite d'un signal sonore en stéréo.

*F I G. 1*

180°

1

HA

36°

HB

2

3

*F I G. 2*

Tape transport
direction

216°

180°

Rotary
head movement

Tv

36°

TA

4A 4B 4A 4B

*F I G. 3*

Tape transport
direction

36°

36°

36°

216°

36°

Rotary
head movement

④

③

②

①

⑥

⑤

36°

36°

4A 4B 4A 4B

1

F I G. 4.

FIG. 5

EP 0 179 920 B1

FIG. 6A — PRF(PRF')
FIG. 6B — PE
FIG. 6C — PS1
FIG. 6D — PS2

FIG. 7A — PRF
FIG. 7B — PE
FIG. 7C — PRF'
FIG. 7D — PS1
TF ← → TB
FIG. 7E — PS2

FIG. 12A — | Ln | Rn | Ln+1 | Rn+1 | Ln+2 | Rn+2 | Ln+3 | SD
$\frac{1}{3}$fH

FIG. 12B — | Ln | Rn | Ln+2 | Rn+2 | SDE

FIG. 12C — | Ln+1 | Rn+1 | Ln+3 | Rn+3 | SDO
$\frac{1}{2}$fH

4

$$\leftarrow \, ^1/_4\text{f}_H \, \rightarrow$$

FIG. 8A | Ln | Rn | Ln+1 | Rn+1 | Ln+2 | Rn+2 | Ln+3 | SD

FIG. 8B | Ln | Rn | Ln+2 | Rn+2 | Ln+4 | Rn+4 | Ln+6 | SDE

FIG. 8C | Ln+1 | Rn+1 | Ln+3 | Rn+3 | Ln+5 | Rn+5 | Ln+7 | SDO

FIG. 8D | Ln | Rn | Ln+2 | Rn+2 | SDÉ

FIG. 8E | Ln+1 | Rn+1 | Ln+3 | Rn+3 | SDÓ

$$\leftarrow \, ^1/_2\text{f}_H \, \rightarrow$$

FIG. 9

Tape transport direction

Rotary head movement

216°

180°

36°

SDÉ

TA'

TA

Tv

3

SDÓ

4A

4B

F I G. 10A ⌐PRF(Psα)

F I G. 10B | Sv | | SD | Sv | ⌐SBA

F I G. 10C | SD | Sv | | SD | Sv ⌐SBB

F I G. 10D | SD | | SD | | SD |

F I G. 10E ⌐Pe

F I G. 11A ⌐PRF

F I G. 11B ‾SBA

F I G. 11C ‾SBB

F I G. 11D ⌐PRF'

F I G. 11E SDó⌐ ⌐SDé { SBA / SBB

F I G. 11F ⌐Pe

F I G. 11G ⌐Pf